Europäisches Patentamt

European Patent Office

Office européen des brevets

(19)

(11) Numéro de publication : **0 010 043**
**B1**

(12)

# FASCICULE DE BREVET EUROPÉEN

(45) Date de publication du fascicule du brevet :
30.09.81

(51) Int. Cl.³ : **B 23 Q   3/00**

(21) Numéro de dépôt : 79400702.1

(22) Date de dépôt : 04.10.79

(54) **Dispositif tournant de compression de pièces plates fixé sur un des éléments d'usinage d'une machine-outils.**

(30) Priorité : 06.10.78 FR 7828960

(43) Date de publication de la demande :
16.04.80 (Bulletin 80/08)

(45) Mention de la délivrance du brevet :
30.09.81 Bulletin 81/39

(84) Etats contractants désignés :
**AT BE DE GB IT NL SE**

(56) Documents cités :
**CH - A - 182 777**
**DE - A - 2 305 430**
**FR - A - 966 168**
**US - A - 2 290 061**
**US - A - 3 668 971**
**US - A - 4 037 831**

(73) Titulaire : **Vierstraete, Jean**
**83 rue Victor Hugo**
**F-62590 Oignies (FR)**

(72) Inventeur : **Vierstraete, Jean**
**83 rue Victor Hugo**
**F-62590 Oignies (FR)**

Imprimerie Jouve, 17, rue du Louvre, 75001 Paris, France

## Dispositif tournant de compression de pièces plates fixé sur un des éléments d'usinage d'une machine-outils

L'Invention concerne un dispositif conçu pour l'usinage des pièces plates et en particulier pour la découpe par fraisage de tôles monoblocs ou empilées les unes sur les autres. Un dispositif de compression de pièce, fixé sur la tête de fraisage est animé d'un mouvement rotatif dont l'axe de rotation est concourant à l'axe de rotation de l'outil d'usinage, ce mouvement étant commandé par la commande numérique de la machine qui situe toujours l'axe d'alignement des moyens de compression des tôles perpendiculairement à la ligne de déplacement de l'outil.

Des machines de découpe par fraisage existent déjà, en particulier dans les usines aéronautiques et sont conçues pour obtenir, soit par copiage, soit par commande numérique un format de pièces empilées pour réaliser une épaisseur maximum admissible. Pour cela les pièces sont préalablement découpées grossièrement et extérieurement par un moyen quelconque, percées pour pouvoir être fixées par rivetage sur un montage et solidarisées sur la table d'usinage ; le fraisage peut alors, à l'aide d'une fraise 2 tailles, contourner le format pour lui donner une forme appropriée ; les pièces sont ensuite désolidarisées, percées selon une géométrie demandée, puis pliées à une forme prescrite ; cette pratique a donc les désavantages suivants :

— Une manipulation importante.

— Une perte de métal due à l'obligation d'une découpe grossière primaire.

— Une grande perte de temps d'où un faible rendement.

— Une multiplication des postes d'usinage.

— L'obligation de reprendre les pièces fraisées pour les percer.

— L'impossibilité de sortir directement, par fraisage, plusieurs pièces d'un format de tôle du commerce.

— L'exigence d'un nombre important de points de fixation pour éviter la vibration des pièces en cours de découpe.

La présente invention a pour but d'apporter remède à ces inconvénients.

L'invention est exposée dans les revendications. Elle résout ces problèmes en assurant une compression constante de l'épaisseur à usiner au plus près de l'outil qui exécute l'usinage, l'axe d'alignement des moyens de compression de la ou des tôles étant constamment maintenu perpendiculaire à la ligne de déplacement de l'outil.

Les avantages obtenus grâce à cette invention sont les suivants :

— Un meilleur maintien, au plus près de l'outil, exempt de vibrations, dont on pourra retirer un rendement d'usinage supérieur, d'où un temps plus court d'exécution.

— Un nombre inférieur de points de fixation.

— Une possibilité d'usinage d'un format de grande surface permettant d'en sortir plusieurs pièces.

— N'ayant qu'une seule référence de départ, la possibilité de percer préalablement ce grand format et de sortir les pièces terminées de perçage et de découpage et ainsi d'éviter les reprises.

— Optimiser la surface de tôle par la recherche d'une imbrication des pièces qui réduira le pourcentage des chutes.

— Diminuer le nombre de postes d'usinage et permettre l'implantation d'une unité de production en ligne groupant plusieurs machines de fonctions différentes, appelée généralement « groupe transfert ».

Dans ce qui suit, l'invention est exposée plus en détail à l'aide de dessins représentant seulement un mode d'exécution non limitatif.

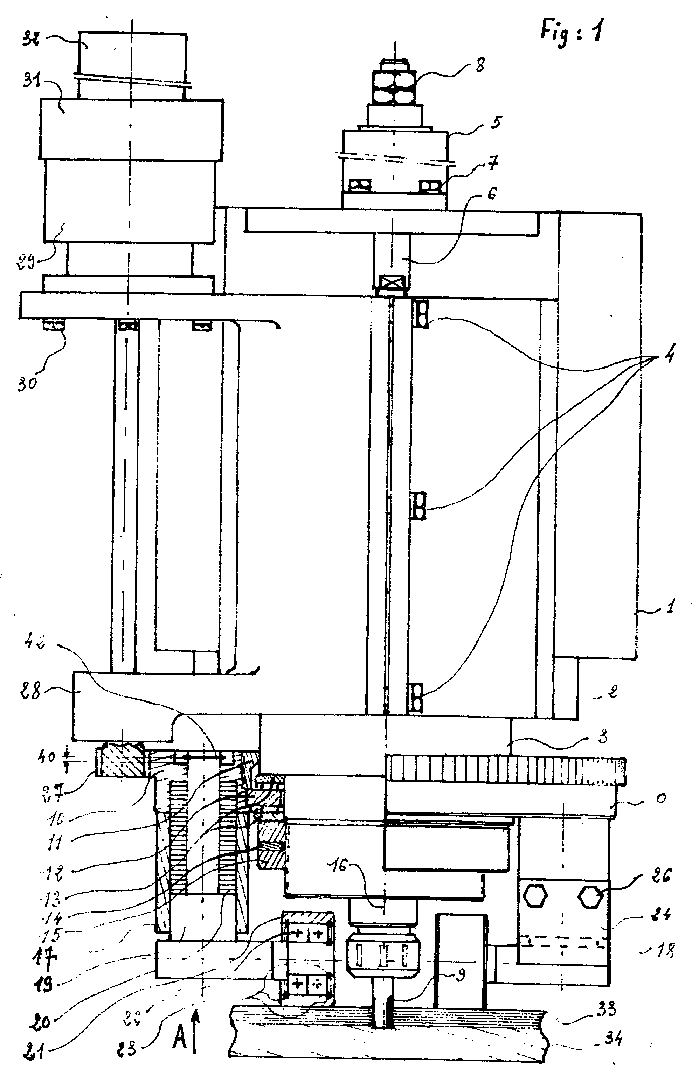

La figure 1 représente, de face, une tête de fraisage et la demi-coupe d'un dispositif rotatif de compression de la ou des pièces en cours d'usinage, celui-ci étant à indexation angulaire. La figure 2 représente une vue de dessous, selon A, de ce même ensemble.

La figure 3 représente une vue cinématique des différentes positions de l'axe de l'alignement des moyens de compression par rapport à la ligne de déplacement de l'outil d'usinage.

Les figures représentent l'ensemble des dispositifs d'usinage, de compression, de rotation (0) et d'asservissement de ce mouvement circulaire.

Sa constitution de base comprend une cuirasse 1, formant glissière, sur laquelle coulisse un bélier 2 solidarisé à une broche 3 par des moyens de fixation 4 ; un moyen de commande de plongée, qui peut être avantageusement un vérin à double tige 5, pneumatique, hydraulique, mécanique, électrique, ou autre, agit sur le bélier 2 par l'intermédiaire d'une tige 6. Le moyen de commande est lui-même fixé à la cuirasse 1 par des vis 7 ; un ensemble écrou et contre-écrou 8, vissé sur la deuxième tige, permet de régler la profondeur de plongée de l'outil de découpe 9 en respectant un certain jeu 40 sous un circlips 42 pour assurer une compression effective de la pièce en cours d'usinage.

La broche 3 supporte une couronne dentée 10 par l'intermédiaire de deux butées à aiguilles 13 dont le jeu, sur la plaque médiane 12, est réglé par un écrou 15 freiné par une vis 14 ; cette plaque 12 est maintenue sur la couronne 10 par un écrou autolubrifiant 11, lui-même freiné par une vis, non visible sur le dessin ; cette couronne a donc sa rotation concourante à l'axe de rotation 16 de l'outil 9.

Cette couronne 10 est solidaire d'au moins deux colonnes 17, de section extérieure carrée, situées à 180° l'une de l'autre et sur un axe 18 passant par l'axe de rotation 16 et perpendiculaire à lui ; ces colonnes sont alésées pour recevoir 2 tiges épaulées 19 en appui sur des rondelles de compression 20 limitées dans leur course basse par les circlips 42 ; chaque prolongement perpendiculaire de ces deux tiges reçoit, sur l'axe 18, un galet de roulement 21 par l'intermédiaire de roulements 22 retenus par des circlips 23 ; l'alignement, par rapport à l'axe 18, de ces blocs de compression est assuré par deux plaques 24, 25 fixées chacune, par des vis 26, sur les deux colonnes 17. Un pignon arbré 27, engrainé sur la couronne dentée 10, tourne sur des paliers constitués par des roulements, non visibles sur le dessin, dans un logement 28 ; l'extrémité opposée du pignon 27 est solidarisée, par un moyen approprié, à un moteur à courant continu 29 fixé au bélier 2 par des vis 30 ; ce moteur reçoit un réducteur 31 possédant le même rapport de démultiplication que l'ensemble pignon-couronne 27, 10 ; ainsi un moyen de contrôle axial 32, qui peut être avantageusement un « résolver », tournera dans un rapport 1/1 de la couronne 10, permettant le contrôle, par la commande numérique, du positionnement angulaire de celle-ci et donc de l'axe d'alignement 18 des moyens de compression, ce procédé étant couramment employé en commande numérique.

Trois principes de machines peuvent être adoptés :

— Soit une tête de fraisage fixe ; dans ce cas la table supportant, la ou les pièces à usines, est animée d'un mouvement croisé X et Y.

— Soit une tête mobile, sur un bélier (axe Y) associé à un déplacement de table (X) perpendiculaire à l'axe Y ; là encore la ou les pièces sont en mouvement, mais dans un seul sens.

— Soit une machine mobile ; dans ce cas la machine est animée d'un mouvement X, la tête de fraisage se déplaçant transversalement sur les glissières de la machine de l'axe Y, la pièce étant fixe en cours d'usinage, nous adopterons cette solution comme exemple du descriptif de fonctionnement qui va suivre.

Comme on a pu le voir, la pièce 33 peut être constituée de l'empilage de plusieurs tôles de même format limitées à une épaisseur maxima déterminée ; ces tôles seront donc, après perçage, rivées sur un support 34, qui peut être avantageusement un aggloméré-bois bloqué, soit sur une table fixe, soit sur un support de pièce bridé lui-même sur la machine, comme dans le cas d'un usinage en ligne par « groupe transfert », les références cartésiennes de ce bridage étant les mêmes que sur la machine précédente.

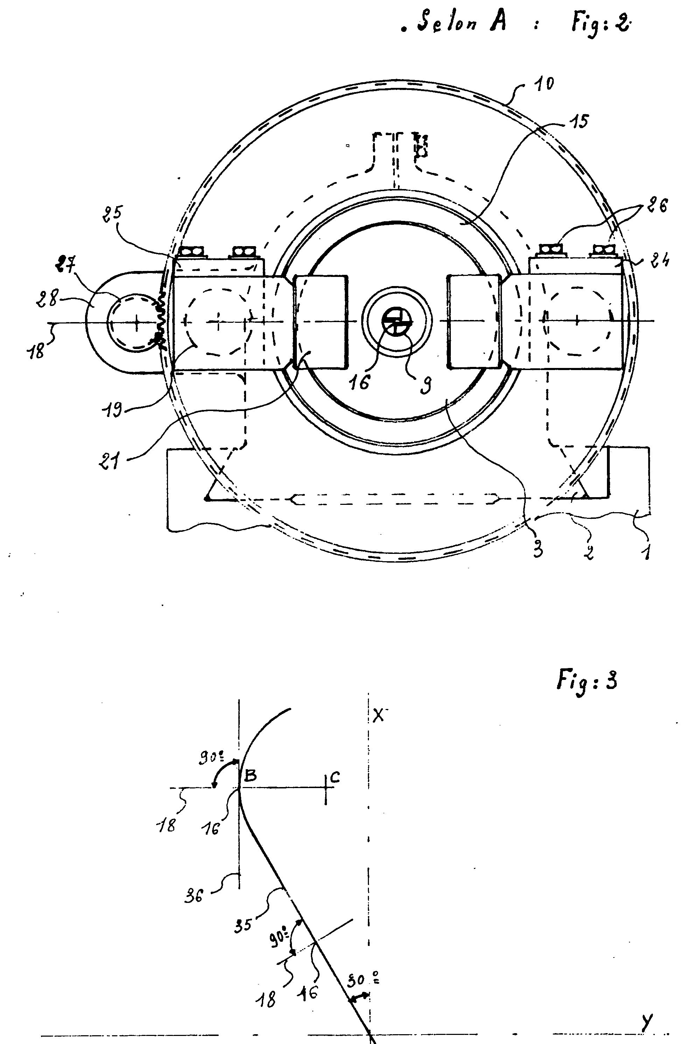

Sur la figure 3, la ligne d'usinage 35, suivie par la fraise, ayant pour axe de rotation 16, est une dérive combinée des axes X et Y ; quelque soit sa forme géométrique, il existe une constante qui est une perpendiculaire de la position de l'axe de l'alignement 18 par rapport, soit à la ligne de déplacement de l'outil 35, quand il se déplace sur une droite (sur cet exemple 30° de l'axe X) soit à la tangente 36 de l'arc (ayant pour rayon B-C) quand le déplacement de l'outil décrit une courbe ; partant de ce fait, il est donc possible, si l'on emploie une commande numérique à calculateur, de créer un logiciel régissant la position de l'axe d'alignement 18 en constante perpendicularité aux deux critères énoncés ci-dessus ; ce principe est déjà employé sur des applications d'orientation de tête d'oxycoupage ; à noter qu'une commande numérique à 3 axes indépendants peut être également employée, étant entendu que la programmation et l'établissement de la bande seront forcément plus longs.

Il est à noter qu'il est possible d'employer un nombre de blocs de compression différent, ainsi que de formes différentes. Ces blocs de compression pourraient être également commandés hydrauliquement, pneumatiquement, éléopneumatiquement, électriquement, ou par d'autres procédés ; les colonnes 17 seraient alors constituées par des vérins appropriés, les compressions sur la pièce en cours d'usinage pouvant être tarées, au gré du besoin, par l'intermédiaire de réducteurs de pression, de limiteurs de courant attractif ou d'autres procédés.

De même les galets 21 pourraient être d'une toute autre nature ; à titre d'exemple non limitatif, nous citerons des patins à rouleaux à aiguilles ou à billes cyclés, chacun de ceux-ci pouvant être angulairement mobile autour de l'axe horizontal 18, lui permettant d'osciller autour de cet axe afin de pouvoir absorber de légers obstacles pouvant apparaître à la surface de la pièce ; il serait également possible d'employer des billes, genre billes de manutention, groupées sur des supports, tous ces procédés étant des éléments connus du commerce ; dans tous ces cas, le dispositif pourrait alors être, au choix, solidaire du bélier 2 ou de la cuirasse 1, puisqu'il posséderait un serrage autonome non tributaire du mouvement du vérin 5.

## Revendications

1. Dispositif tournant de compression de pièces plates (33) fixées sur la tête d'usinage d'une machine-outil, caractérisé en ce qu'il comprend au moins deux colonnes de guidage (17) creuses, extérieurement carrées, disposées de part et d'autre de la tête et parallèlement à celle-ci, et une couronne dentée (10) disposée coaxialement à la tête et au-dessus des deux colonnes (17), les dents de la couronne (10) permettant la commande de la position de la couronne en rotation, chaque colonne (17) contenant des moyens de compression (20) s'appuyant d'une part sur la couronne (10), d'autre part sur une tige épaulée (19) dont l'épaulement s'emboîte à l'extrémité inférieure de la colonne (17), chaque tige (19) supportant un galet (21) à rotation libre comprimant directement les pièces (33) et les deux tiges (19) étant disposées selon un axe commun (18) concourant à l'axe (16) de la tête au moyen de plaques (24) fixées aux colonnes (17) parallèlement audit axe (18) des tiges (19) et prolongeant les colonnes (17) dans leur partie inférieure.

2. Dispositif selon la revendication 1, caractérisé par le fait que les moyens de compression (17) sont des vérins.

3. Dispositif selon l'une des revendications 1 et 2, caractérisé par le fait que la rotation libre des galets (21) se fait au moyen de patins à rouleaux, à aiguilles, à billes cyclées, ou de billes de manutention.

4. Dispositif selon l'une des revendications précédentes, caractérisé par le fait que la commande de la position de la couronne s'effectue sous l'action d'un pignon arbré (27) entraîné par un moteur (29) qui, au moyen d'un réducteur approprié (31), entraîne un moyen de contrôle angulaire (32) dans un rapport de rotation identique à celui de la couronne.

## Claims

1. Turning compression-device for flat pieces (33), set on the machining-head of a machine-tool, characterized by the fact it includes at least two space guide-columns, externally square, set on the both sides of the head and paralelly to it, together with a rim (10), which is set coaxially to the head and above the both columns (17). The teeth of the rim (10) allow to drive the rotary rim. Each columns (17) contains compression-washers (20) resting in one hand on the rim (10), on the other hand on a shouldered stem (19), shoulder of which fits into the bottom extremity of the columns (17), each stem (19) bearing a free rotatio roller (21), which presses directly the pieces (33). The both stems (19) are set according to a common axis (18) concurrent to the head's axis (16) thanks to falts (24), fixed on the columns (17) in their bottom part.

2. Further to 1, device characterized by the fact that the compression-means (17) are jacks.

3. Further to 1 and 2, device characterized by a free rotation of the rollers (21) thanks to soles with rollers, needles, cycled balls or handling-balls.

4. According to above revendications, device characterized by a rim's position drived by a shafted-pinion, truned by a motor (29), which thanks to a suitable reducer (31) involves and angular control-system (32) in the same rotation-ratio as for the rim.

## Ansprüche

1. Dreheinrichtung für die Kompression von Flachblechen (33), an dem Bearbeitungskopf einer Werkzeugmaschine gehaftet, die daran kenntlich ist, dass sie mindestens zwei höhle Ständen, quadrate äusserlich, in der beiden Seiten und senkrecht zu dem Kopf liegend, sowie einen Zahnkranz (10), koaxial zu dem Kopf liegend, enthalt. Die Zähne des Zahnkranz (10) erlauben die Steuerung der Stellung des drehenden Zahnkranz ; jeder Ständer (17), enthalt Belleville-Dichtungsringen (20), die sich, einer Seit an dem Zahnkranz (10) und anderer Seit an einer Stangen (19), deren Schulter am unterigen Ende des Ständers (17), ineinanderpasst, lehnt. Jede Stangen (19) stützt einen Laufrollen mit freier Umdrehung ab, der direktlich die Stücken (33) drückt. Die beiden Stängen (19) sind, einer gemeinsamen Achse (18) gemäss, gestellt, die zusammenwirkend mit der Achse (16) des Kopfs ist, mittels Platten (24) an der Ständern (17) gehaftet, gleichlaufend mit der Achse (18) der Stängen (19) und verlängernd die Ständern (17) in ihrem unterigen Teil.

2. Anspruch 1 nach, Einrichtung daran kenntlich, dass die Kompressionsmitteln (17) arbeitzylindern sind.

3. Anspruchen 1 und 2 nach, Einrichtung daran kenntlich, dass die freie Umdrehung des Laufrollen (21) mittels Rollenumlauf-, Nadel-, Kugeln- und Förderungskugelnschuhen getan ist.

4. Der vorigen Anspruchen nach, Einrichtung daran kenntlich, dass die Steuerung der Stellung des Zahnkranz (10) bei einem Ritzel (27) mit Motorantrieb (29) geführt ist, der, mittels eines geeigneten Reduziereinsatz (31), einen winkeligen Kontrollemittel (32) in demselben Umdrehungsverhältnis wie der Zahnkranz antreibt.

Fig: 1

0 010 043

Fig: 3